# FASCICULE DE BREVET EUROPEEN

(11) **EP 4 086 178 B1**
(45) Date de publication et mention de la délivrance du brevet: **21.02.2024**
(21) Numéro de dépôt: 22171156.7
(22) Date de dépôt: 02.05.2022
(51) Int. Cl.: B64D 27/24, B64D 35/08, B64D 37/30, B64D 37/34, B64D 33/08, H02K 7/075, H02K 7/18, H02K 9/19, H02K 16/00, H02K 41/02

(54) **SYSTÈME DE PROPULSION POUR AÉRONEF COMPORTANT UN MOTEUR ÉLECTRIQUE LINÉAIRE**
ANTRIEBSSYSTEM FÜR LUFTFAHRZEUG MIT EINEM LINEAREN ELEKTROMOTOR
PROPULSION SYSTEM FOR AIRCRAFT COMPRISING A LINEAR ELECTRIC MOTOR

(30) Priorité: 04.05.2021 FR 2104713
(43) Date de publication de la demande: 09.11.2022
(73) Titulaire: AIRBUS OPERATIONS, 31060 Toulouse Cedex 9 (FR)
(72) Inventeur: POME, Pascal, 31060 TOULOUSE Cedex 9 (FR); CZAPLA, Lionel, 31060 TOULOUSE Cedex 9 (FR); THUBERT, Benjamin, 31060 TOULOUSE Cedex 9 (FR)
(74) Mandataire: Cabinet Le Guen Maillet

(56) Documents cités:
- CN-A- 105 375 677
- US-A1- 2016 049 848
- US-A1- 2017 190 435
- US-A1- 2019 118 961

## Description

### DOMAINE TECHNIQUE

La présente invention concerne un système de propulsion pour un aéronef, ledit système de motorisation comportant au moins un moteur électrique linéaire, ainsi qu'un aéronef comportant au moins un tel système de propulsion.

### ÉTAT DE LA TECHNIQUE ANTÉRIEURE

Afin de se déplacer, un aéronef comporte un système de propulsion comportant un moteur rotatif et une hélice. Le moteur rotatif génère un mouvement rotatif qui est transmis à l'hélice.

Il est connu d'utiliser un moteur électrique afin de mettre en mouvement l'hélice, et il est également connu d'utiliser une pile à combustion afin d'alimenter le moteur électrique rotatif.

Le document US-A-2019/118961 divulgue un système de propulsion de l'état de la technique.

Bien qu'un tel arrangement donne de bons résultats, il est souhaitable de trouver un arrangement différent permettant entre autres d'obtenir un rapport de vitesse plus précis.

### EXPOSÉ DE L'INVENTION

Un objet de la présente invention est de proposer un système de propulsion comportant au moins un moteur électrique linéaire avec un système de transmission particulier permettant entre autres d'obtenir un rapport de vitesse plus précis.

À cet effet, est proposé un système de propulsion pour un aéronef comportant :
- un châssis,
- une hélice montée mobile en rotation sur le châssis autour d'un axe de rotation,
- un engrenage principal solidaire de l'hélice et coaxial avec l'axe de rotation,
- un générateur électrique,
- au moins un moteur électrique linéaire alimenté électriquement par le générateur électrique et comportant un élément fixe fixé au châssis et un coulisseau mobile en translation le long de l'élément fixe selon une direction de déplacement,
- pour chaque moteur électrique linéaire, un engrenage secondaire engrenant avec l'engrenage principal et monté mobile en rotation sur le châssis autour d'un axe de rotation perpendiculaire à l'axe de rotation, et
- pour chaque moteur électrique linéaire, une bielle avec deux extrémités dont l'une est montée articulée au niveau d'une articulation sur le coulisseau du moteur électrique linéaire correspondant et dont l'autre est montée articulée sur l'engrenage secondaire correspondant au niveau d'une articulation désaxée par rapport à l'axe de rotation de l'engrenage secondaire associé au moteur électrique linéaire.

Avec un tel système de transmission, il est possible d'utiliser des moteurs électriques linéaires et un train d'engrenages présentant un rapport de vitesse précis.

Avantageusement, la direction de déplacement est parallèle à l'axe de rotation de l'hélice.

Avantageusement, chaque coulisseau se déplace entre deux positions extrêmes, à savoir une position proximale au plus près de l'engrenage secondaire et une position distale au plus loin de l'engrenage secondaire, lorsque le coulisseau est en position proximale, les axes des deux articulations et l'axe de rotation de l'engrenage secondaire sont alignés entre eux et l'axe de rotation de l'engrenage secondaire est entre les axes des deux articulations et lorsque le coulisseau est en position distale, les axes des deux articulations et l'axe de rotation de l'engrenage secondaire sont alignés entre eux et l'axe de l'articulation de l'engrenage secondaire est entre l'axe de l'articulation du coulisseau et l'axe de rotation de l'engrenage secondaire.

L'invention propose également un aéronef comportant au moins un système de propulsion selon l'une des variantes précédentes.

Avantageusement, le générateur électrique est une pile à combustible, et l'aéronef comporte un réservoir de dihydrogène, une conduite d'acheminement qui achemine le dihydrogène du réservoir à la pile à combustible et un système de refroidissement arrangé pour refroidir chaque moteur électrique linéaire.

Selon un mode de réalisation particulier, le système de refroidissement comporte le réservoir et, pour chaque moteur électrique linéaire, une conduite d'acheminement qui est agencée pour assurer un échange thermique entre le moteur électrique linéaire et le dihydrogène circulant dans la conduite d'acheminement entre le réservoir et la pile à combustible.

Selon un mode de réalisation particulier, le système de refroidissement comporte le réservoir et la conduite d'acheminement qui est agencée pour assurer un échange thermique successivement entre chaque moteur électrique linéaire et le dihydrogène circulant dans la conduite d'acheminement entre le réservoir et la pile à combustible.

Avantageusement, le système de refroidissement comporte également un échangeur thermique qui est agencé en aval des moteurs électriques linéaires pour assurer un échange thermique entre le dihydrogène circulant dans la conduite d'acheminement et un fluide.

Selon un mode de réalisation particulier, le système de refroidissement comporte un premier échangeur thermique, un deuxième échangeur thermique, une conduite d'échange dans laquelle circule un fluide caloporteur, le réservoir et la conduite d'acheminement, la conduite d'échange forme une boucle qui est agencée pour successivement traverser le premier échangeur thermique, assurer un échange thermique successivement entre chaque moteur électrique linéaire et le fluide caloporteur, traverser le deuxième échangeur thermique et rejoindre le premier échangeur thermique, le premier échangeur thermique est agencé pour assurer un échange thermique entre le dihydrogène circulant dans la conduite d'acheminement entre le réservoir et la pile à combustible et le fluide caloporteur circulant dans la conduite d'échange, le deuxième échangeur thermique est agencé pour assurer un échange thermique entre le fluide caloporteur circulant dans la conduite d'échange et un fluide, et le premier échangeur thermique est disposé en amont des moteurs électriques linéaires et le deuxième échangeur thermique est disposé en aval des moteurs électriques linéaires par rapport au sens d'écoulement du fluide caloporteur dans la conduite d'échange.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'un aéronef comportant une pluralité de systèmes de propulsion à hélice selon l'invention,
Fig. 2 est une représentation schématique d'un système de propulsion à hélice selon un premier mode de réalisation de l'invention,
Fig. 3 est une représentation schématique d'un système de propulsion à hélice selon un deuxième mode de réalisation de l'invention,
Fig. 4 est une représentation schématique d'un système de propulsion à hélice selon un troisième mode de réalisation de l'invention, et
Fig. 5 est une représentation schématique d'un système de propulsion à hélice.

### EXPOSÉ DÉTAILLÉ DE MODES DE RÉALISATION

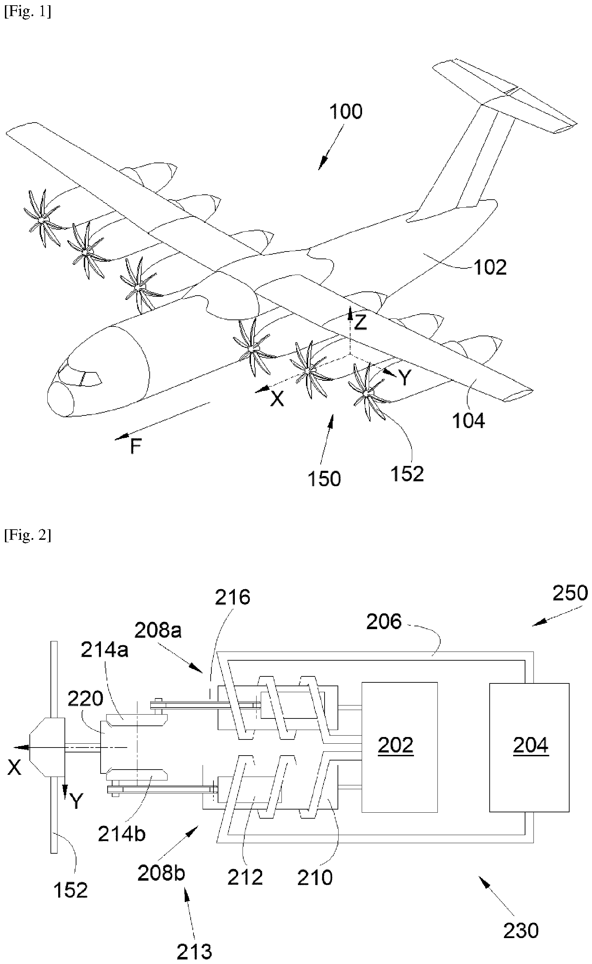

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

La Fig. 1 montre un aéronef 100 qui présente un fuselage 102 de part et d'autre duquel est fixée une aile 104. Sous chaque aile 104 est fixé au moins un système de propulsion à hélice 150. Dans le mode de réalisation de l'invention présenté à la Fig. 1, il y a trois systèmes de propulsion 150 par aile 104.

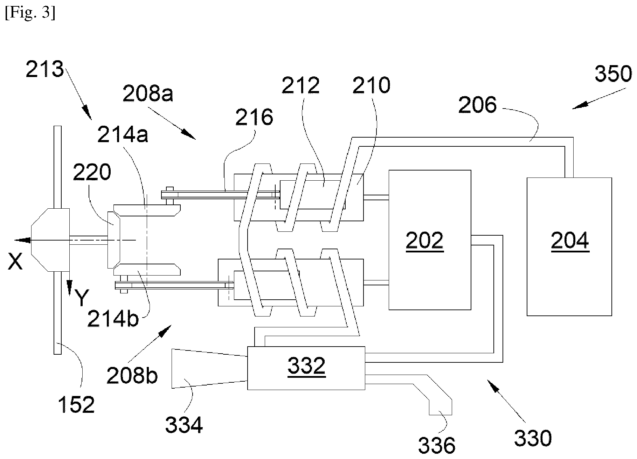

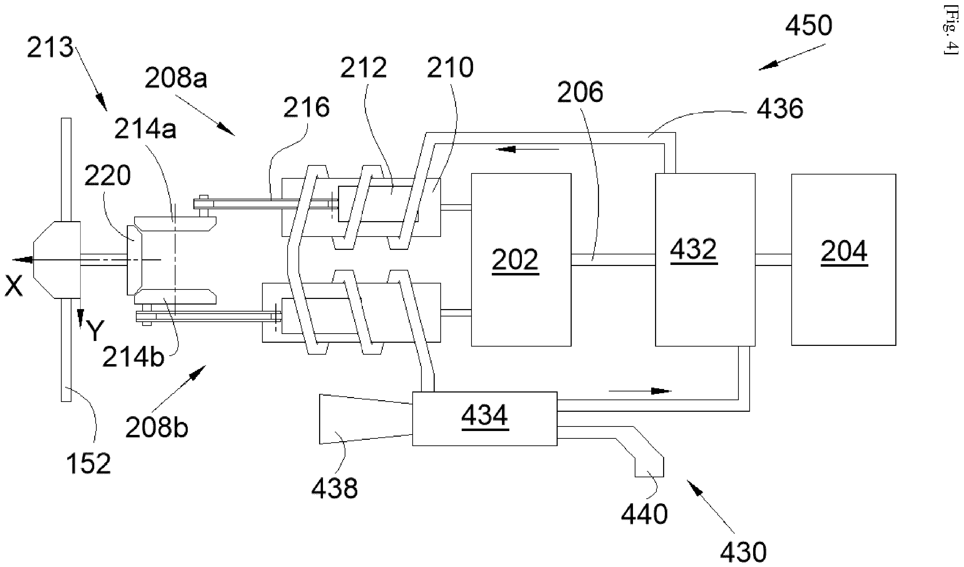

La Fig. 2 montre le système de propulsion 250 selon un premier mode de réalisation de l'invention, la Fig. 3 montre le système de propulsion 350 selon un deuxième mode de réalisation de l'invention et la Fig. 4 montre le système de propulsion 450 selon un troisième mode de réalisation de l'invention. Le système de propulsion 250, 350, 450 comporte un châssis et une hélice 152 montée mobile en rotation sur le châssis.

Dans la description qui suit, et par convention, on appelle X l'axe longitudinal qui correspond à l'axe de rotation de l'hélice 152 orienté positivement dans le sens d'avancement de l'aéronef 100, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

Le système de propulsion 250, 350,450 comporte un générateur électrique qui prend ici la forme d'une pile à combustible 202. La pile à combustible 202 est une pile dans laquelle la génération d'une tension électrique se fait grâce à l'oxydation sur une électrode d'un combustible réducteur, comme par exemple le dihydrogène, couplée à la réduction sur l'autre électrode d'un oxydant, comme par exemple l'oxygène de l'air.

Dans le cas du dihydrogène, l'aéronef 100 comporte un réservoir 204 qui permet le stockage de dihydrogène et une conduite d'acheminement 206 qui achemine le dihydrogène du réservoir 204 à la pile à combustible 202.

Dans le cas de l'oxygène de l'air, l'aéronef 100 comporte un système de prélèvement d'air, par exemple des écopes qui permettent de prélever de l'air par exemple à l'extérieur de l'aéronef 100 et une conduite d'apport qui achemine l'air du système de prélèvement d'air à la pile à combustible 202.

Le système de propulsion 250, 350,450 comporte également au moins un moteur électrique linéaire 208a-b, où chaque moteur électrique linéaire 208a-b est alimenté électriquement par le générateur électrique, et plus particulièrement ici par la pile à combustible 202 à travers des conducteurs électriques.

Dans le mode de réalisation de l'invention présenté sur les Figs. 2 à 4, il y a deux moteurs électriques linéaires, mais il pourrait y en avoir qu'un, voire plus de deux si l'encombrement le permet.

Chaque moteur électrique linéaire 208a-b comporte un élément fixe 210 fixé au châssis et un coulisseau 212 mobile en translation le long de l'élément fixe 210. L'élément fixe 210 et le coulisseau 212 comportent les éléments nécessaires pour assurer le déplacement du coulisseau 212 le long de l'élément fixe 210 selon une direction de déplacement qui est ici parallèle à l'axe de rotation X et selon alternativement les deux sens opposés le long de la direction de déplacement.

Chaque moteur électrique linéaire 208a-b est par exemple synchrone et les éléments nécessaires sont connus de l'homme du métier et comportent par exemple des aimants permanents disposés le long de l'élément fixe 210 avec une alternance sud-nord, et des bobines montées sur le coulisseau 212 et alimentées en courant alternatif et déphasées de manière appropriée. Il est également possible de prévoir une succession d'électroaimants disposés le long de l'élément fixe 210 et alimentés en courant alternatif, et des aimants permanents montés sur le coulisseau 212.

Le système de propulsion 250, 350 comporte également une unité de contrôle qui commande chaque moteur électrique linéaire 208a-b. Dans le cas de deux moteurs électriques linéaires 208a-b, l'unité de contrôle peut être prévue pour que lorsqu'elle commande l'un des coulisseaux 212 selon l'un des sens de déplacement, elle commande simultanément l'autre des coulisseaux 212 selon le sens opposé et ainsi, les deux coulisseaux 212 se déplacent toujours dans deux sens opposés.

Pour chaque moteur linéaire 208a-b, le système de propulsion 250, 350, 450 comporte un système de transmission 213 du type système bielle-manivelle.

Chaque système de transmission 213 comporte un engrenage secondaire 214a-b monté mobile en rotation sur le châssis autour d'un axe de rotation perpendiculaire à l'axe de rotation X de l'hélice 152 et également ici perpendiculaire à la direction de déplacement et dans le mode de réalisation de l'invention présenté ici, l'axe de rotation de chaque engrenage secondaire 214a-b est parallèle à l'axe transversal Y.

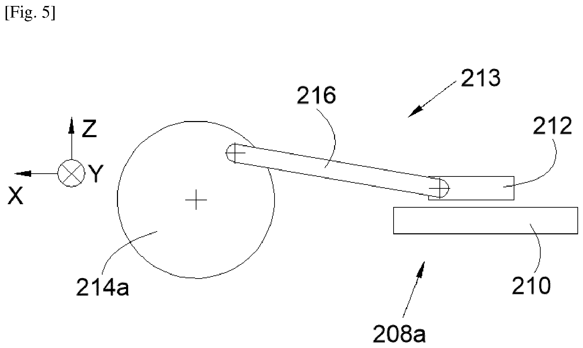

Comme cela est mieux vu sur la Fig. 5 qui est une vue de côté, chaque système de transmission 213 comporte également une bielle 216 qui présente deux extrémités dont l'une est montée articulée au niveau d'une articulation sur le coulisseau 212 du moteur électrique linéaire 208a-b correspondant et dont l'autre est montée articulée sur l'engrenage secondaire 214a-b correspondant au niveau d'une articulation désaxée par rapport à l'axe de rotation de l'engrenage secondaire 214a-b associé au moteur électrique linéaire 208a-b. Chaque articulation prend la forme d'une liaison pivot avec un axe parallèle à l'axe de rotation de l'engrenage secondaire 214a-b.

Ainsi, le déplacement d'un coulisseau 212 va entraîner le déplacement en rotation de l'engrenage secondaire 214a-b correspondant sous l'action de la bielle 216.

Chaque coulisseau 212 se déplace entre deux positions extrêmes, à savoir une position proximale au plus près de l'engrenage secondaire 214a-b et une position distale au plus loin de l'engrenage secondaire 214a-b.

Pour assurer que l'engrenage secondaire 214a-b tourne toujours dans le même sens quel que soit le sens de déplacement du coulisseau 212, il faut que lorsque le coulisseau 212 est en position proximale, les axes des deux articulations et l'axe de rotation de l'engrenage secondaire 214a-b soient alignés entre eux et l'axe de rotation de l'engrenage secondaire 214a-b est entre les axes des deux articulations et que lorsque le coulisseau 212 est en position distale, les axes des deux articulations et l'axe de rotation de l'engrenage secondaire 214a-b soient alignés entre eux et l'axe de l'articulation de l'engrenage secondaire 214a-b est entre l'axe de l'articulation du coulisseau 212 et l'axe de rotation de l'engrenage secondaire 214a-b.

Le système de propulsion 250, 350, 450 comporte également un engrenage principal 220 qui est monté mobile en rotation sur le châssis autour de l'axe de rotation X de l'hélice 152 et il est solidaire de ladite hélice 152. L'engrenage principal 220 est coaxial avec l'axe de rotation X de l'hélice 152

L'engrenage principal 220 engrène avec chacun des engrenages secondaires 214a-b, et dans le mode de réalisation de l'invention présenté sur les Figs. 2 à 4, chaque engrenage 220, 214a-b prend la forme d'un engrenage conique.

En fonctionnement, pour chaque moteur électrique linéaire 208a-b, le coulisseau 212 est mis en mouvement, ce qui entraîne la mise en rotation de l'engrenage secondaire 214a-b correspondant qui tourne alors de manière continue et entraîne à son tour l'engrenage principal 220 et par conséquent l'hélice 152. Un tel arrangement permet entre autres l'obtention d'un rapport de vitesse précis.

Dans les modes de réalisation de l'invention présentés ici, il y a deux moteurs électriques linéaires 208a-b qui sont disposés de manière à ce que leurs engrenages secondaires 214a-b soient disposés de manière diamétralement opposée par rapport à l'engrenage principal 220. Dans le cas d'un nombre supérieur de moteurs électriques linéaires, les moteurs électriques linéaires 208 a-b seront répartis de manière à ce que leurs engrenages secondaires 214a-b soient répartis régulièrement autour de l'axe de rotation X de l'hélice 152.

Chaque moteur électrique linéaire 208a-b a tendance à chauffer en fonctionnement et, en particulier dans le cas d'un moteur supraconducteur, il est souhaitable de refroidir ledit moteur électrique linéaire 208a-b afin de garantir ses performances optimales. À cette fin, le système de propulsion 250, 350, 450 comporte un système de refroidissement 230, 330, 430.

Dans le mode de réalisation de la Fig. 2, le système de refroidissement 230 comporte le réservoir 204 de dihydrogène et, pour chaque moteur électrique linéaire 208a-b, une conduite d'acheminement 206 qui est agencée pour assurer un échange thermique entre le moteur électrique linéaire 208a-b et le dihydrogène, en particulier sous forme liquide, circulant dans la conduite d'acheminement 206 entre le réservoir 204 et la pile à combustible 202. Dans le mode de réalisation de l'invention présenté ici, l'agencement est matérialisé par un enroulement de la conduite d'acheminement 206 autour du moteur électrique linéaire 208a-b, mais dans un autre mode de réalisation, l'agencement peut être constitué de canaux formés à l'intérieur du moteur électrique linéaire 208a-b et ciblant par exemple des zones spécifiques dudit moteur électrique linéaire 208a-b.

Après l'échange thermique avec le moteur électrique linéaire 208a-b, la conduite d'acheminement 206 se prolonge jusqu'à la pile à combustible 202.

Dans le mode de réalisation de la Fig. 2, il y a donc une conduite d'acheminement 206 par moteur électrique linéaire 208a-b.

Dans le mode de réalisation de la Fig. 3, le système de refroidissement 330 comporte le réservoir 204 de dihydrogène et une conduite d'acheminement 206 qui est agencée pour assurer un échange thermique successivement entre chaque moteur électrique linéaire 208a-b et le dihydrogène, en particulier sous forme liquide, circulant dans la conduite d'acheminement 206 entre le réservoir 204 et la pile à combustible 202. Dans le mode de réalisation de l'invention présenté ici, l'agencement est matérialisé par un enroulement de la conduite d'acheminement 206 autour de chaque moteur électrique linéaire 208a-b.

Après l'échange thermique avec tous les moteurs électriques linéaires 208a-b, la conduite d'acheminement 206 se prolonge jusqu'à la pile à combustible 202.

Dans le mode de réalisation de la Fig. 3, il y a donc une conduite d'acheminement 206 pour l'ensemble des moteurs électriques linéaires 208a-b.

Dans 1e mode de réalisation de la Fig. 3, le système de refroidissement 330 comporte également un échangeur thermique 332 qui assure un échange thermique entre le dihydrogène circulant dans la conduite d'acheminement 206 et un fluide. Ledit fluide est par exemple de l'air comme par exemple de l'air extérieur prélevé par exemple à l'extérieur au niveau d'une écope 334 et rejeté par exemple à l'extérieur par une ouverture de décharge 336. Le fluide peut également être de l'air provenant de la nacelle, de l'huile, de l'air sortant de la pile à combustible 202. L'échangeur thermique 332 est disposé en aval des moteurs électriques linéaires 208a-b par rapport au sens d'écoulement du dihydrogène dans la conduite d'acheminement 206.

Dans le mode de réalisation de la Fig. 4, le système de refroidissement 430 comporte un premier échangeur thermique 432, un deuxième échangeur thermique 434 et une conduite d'échange 436 dans laquelle circule un fluide caloporteur comme par exemple du méthane liquide.

La conduite d'échange 436 forme une boucle qui est agencée pour successivement traverser le premier échangeur thermique 432, assurer un échange thermique successivement entre chaque moteur électrique linéaire 208a-b et le fluide caloporteur, traverser le deuxième échangeur thermique 434 et rejoindre le premier échangeur thermique 432.

Le fluide caloporteur circule ainsi du premier échangeur thermique 432, aux moteurs électriques linéaires 208a-b, puis au deuxième échangeur thermique 434 et boucle jusqu'au premier échangeur thermique 432. La mise en mouvement du fluide caloporteur est réalisée par tout moyen d'entraînement approprié comme par exemple une pompe installée sur la conduite d'échange 436.

Le système de refroidissement 430 comporte également le réservoir 204 et la conduite d'acheminement 206 qui traverse le premier échangeur thermique 432 qui est ainsi agencé pour assurer un échange thermique entre le dihydrogène circulant dans la conduite d'acheminement 206 entre le réservoir 204 et la pile à combustible 202 et le fluide caloporteur circulant dans la conduite d'échange 436. Après cet échange thermique, la conduite d'acheminement 206 se prolonge jusqu'à la pile à combustible 202.

Le deuxième échangeur thermique 434 est agencé pour assurer un échange thermique entre le fluide caloporteur circulant dans la conduite d'échange 436 et d'un fluide comme de l'air frais prélevé par exemple à l'extérieur au niveau d'une écope 438 et rejeté par exemple à l'extérieur par une ouverture de décharge 440 ou tout autre fluide comme expliqué ci-dessus pour l'échangeur thermique 332 de la Fig. 3.

Le premier échangeur thermique 432 est disposé en amont des moteurs électriques linéaires 208a-b et le deuxième échangeur thermique 434 est disposé en aval des moteurs électriques linéaires 208a-b par rapport au sens d'écoulement du fluide caloporteur dans la conduite d'échange 436.

Dans les modes de réalisation de l'invention décrits ici, en particulier dans le cas de moteurs supraconducteurs dont la température pour un fonctionnement optimal est de l'ordre de 77°K, l'utilisation de dihydrogène liquide dont la température est comprise entre 20°K et 30°K assure un bon refroidissement des moteurs supraconducteurs. En outre, l'utilisation de l'échangeur thermique 332 permet de réchauffer le dihydrogène jusqu'à sa phase gazeuse avant son introduction dans la pile à combustible 202.

## Revendications

1. Système de propulsion (150, 250, 350, 450) pour un aéronef (100) comportant :
- un châssis,
- une hélice (152) montée mobile en rotation sur le châssis autour d'un axe de rotation (X),
- un engrenage principal (220) solidaire de l'hélice (152) et coaxial avec l'axe de rotation (X),
- un générateur électrique (202),
- au moins un moteur électrique linéaire (208a-b) alimenté électriquement par le générateur électrique (202) et comportant un élément fixe (210) fixé au châssis et un coulisseau (212) mobile en translation le long de l'élément fixe (210) selon une direction de déplacement,
- pour chaque moteur électrique linéaire (208a-b), un engrenage secondaire (214a-b) engrenant avec l'engrenage principal (220) et monté mobile en rotation sur le châssis autour d'un axe de rotation perpendiculaire à l'axe de rotation (X), et
- pour chaque moteur électrique linéaire (208a-b), une bielle (216) avec deux extrémités dont l'une est montée articulée au niveau d'une articulation sur le coulisseau (212) du moteur électrique linéaire (208a-b) correspondant et dont l'autre est montée articulée sur l'engrenage secondaire (214a-b) correspondant au niveau d'une articulation désaxée par rapport à l'axe de rotation de l'engrenage secondaire (214a-b) associé au moteur électrique linéaire (208a-b).

2. Système de propulsion (150, 250, 350, 450) selon la revendication 1, **caractérisé en ce que** la direction de déplacement est parallèle à l'axe de rotation (X) de l'hélice (152).

3. Système de propulsion (150, 250, 350, 450) selon l'une des revendications 1 ou 2, **caractérisé en ce que** chaque coulisseau (212) se déplace entre deux positions extrêmes, à savoir une position proximale au plus près de l'engrenage secondaire (214a-b) et une position distale au plus loin de l'engrenage secondaire (214a-b), **en ce que** lorsque le coulisseau (212) est en position proximale, les axes des deux articulations et l'axe de rotation de l'engrenage secondaire (214a-b) sont alignés entre eux et l'axe de rotation de l'engrenage secondaire (214a-b) est entre les axes des deux articulations et **en ce que** lorsque le coulisseau (212) est en position distale, les axes des deux articulations et l'axe de rotation de l'engrenage secondaire (214a-b) sont alignés entre eux et l'axe de l'articulation de l'engrenage secondaire (214a-b) est entre l'axe de l'articulation du coulisseau (212) et l'axe de rotation de l'engrenage secondaire (214a-b).

4. Aéronef (100) comportant au moins un système de propulsion (150, 250, 350, 450) selon l'une des revendications précédentes.

5. Aéronef (100) selon la revendication 4, **caractérisé en ce que** le générateur électrique (202) est une pile à combustible (202), et **en ce que** l'aéronef (100) comporte un réservoir (204) de dihydrogène, une conduite d'acheminement (206) qui achemine le dihydrogène du réservoir (204) à la pile à combustible (202) et un système de refroidissement (230, 330, 430) arrangé pour refroidir chaque moteur électrique linéaire (208a-b).

6. Aéronef (100) selon la revendication 5, **caractérisé en ce que** le système de refroidissement (230) comporte le réservoir (204) et, pour chaque moteur électrique linéaire (208a-b), une conduite d'acheminement (206) qui est agencée pour assurer un échange thermique entre le moteur électrique linéaire (208a-b) et le dihydrogène circulant dans la conduite d'acheminement (206) entre le réservoir (204) et la pile à combustible (202).

7. Aéronef (100) selon la revendication 5, **caractérisé en ce que** le système de refroidissement (330) comporte le réservoir (204) et la conduite d'acheminement (206) qui est agencée pour assurer un échange thermique successivement entre chaque moteur électrique linéaire (208a-b) et le dihydrogène circulant dans la conduite d'acheminement (206) entre le réservoir (204) et la pile à combustible (202).

8. Aéronef (100) selon la revendication 7, **caractérisé en ce que** le système de refroidissement (330) comporte également un échangeur thermique (332) qui est agencé en aval des moteurs électriques linéaires (208a-b) pour assurer un échange thermique entre le dihydrogène circulant dans la conduite d'acheminement (206) et un fluide.

9. Aéronef (100) selon la revendication 7, **caractérisé en ce que** le système de refroidissement (430) comporte un premier échangeur thermique (432), un deuxième échangeur thermique (434), une conduite d'échange (436) dans laquelle circule un fluide caloporteur, le réservoir (204) et la conduite d'acheminement (206), **en ce que** la conduite d'échange (436) forme une boucle qui est agencée pour successivement traverser le premier échangeur thermique (432), assurer un échange thermique successivement entre chaque moteur électrique linéaire (208a-b) et le fluide caloporteur, traverser le deuxième échangeur thermique (434) et rejoindre le premier échangeur thermique (432), **en ce que** le premier échangeur thermique (432) est agencé pour assurer un échange thermique entre le dihydrogène circulant dans la conduite d'acheminement (206) entre le réservoir (204) et la pile à combustible (202) et le fluide caloporteur circulant dans la conduite d'échange (436), **en ce que** le deuxième échangeur thermique (434) est agencé pour assurer un échange thermique entre le fluide caloporteur circulant dans la conduite d'échange (436) et un fluide, et **en ce que** le premier échangeur thermique (432) est disposé en amont des moteurs électriques linéaires (208a-b) et le deuxième échangeur thermique (434) est disposé en aval des moteurs électriques linéaires (208a-b) par rapport au sens d'écoulement du fluide caloporteur dans la conduite d'échange (436).

## Patentansprüche

1. Antriebssystem (150, 250, 350, 450) für ein Luftfahrzeug (100), umfassend:
- einen Rahmen,
- einen Propeller (152), der an dem Rahmen um eine Drehachse (X) drehbeweglich gelagert ist,
- ein Hauptgetriebe (220), das mit dem Propeller (152) fest verbunden ist und koaxial zu der Drehachse (X) ist,
- einen Stromerzeuger (202),
- mindestens einen elektrischen Linearmotor (208a-b), der von dem Stromerzeuger (202) mit Strom versorgt wird und ein feststehendes Element (210), das an dem Rahmen befestigt ist, und einen Läufer (212), der entlang des feststehenden Elements (210) gemäß einer Bewegungsrichtung translatorisch beweglich ist, umfasst,
- für jeden elektrischen Linearmotor (208a-b) ein Nebengetriebe (214a-b), das mit dem Hauptgetriebe (220) in Eingriff steht und an dem Rahmen um eine senkrecht zu der Drehachse (X) verlaufende Drehachse drehbeweglich gelagert ist, und
- für jeden elektrischen Linearmotor (208a-b) eine Pleuelstange (216) mit zwei Enden, von denen das eine an einem Gelenk am Läufer (212) des entsprechenden elektrischen Linearmotors (208a-b) gelenkig gelagert ist und von denen das andere an dem entsprechenden Nebengetriebe (214a-b) an einem Gelenk gelenkig gelagert ist, das in Bezug auf die Drehachse des dem elektrischen Linearmotor (208a-b) zugeordneten Nebengetriebes (214ab) versetzt ist.

2. Antriebssystem (150, 250, 350, 450) nach Anspruch 1, **dadurch gekennzeichnet, dass** die Bewegungsrichtung parallel zu der Drehachse (X) des Propellers (152) ist.

3. Antriebssystem (150, 250, 350, 450) nach einem der Ansprüche 1 oder 2, **dadurch gekennzeichnet, dass** sich jeder Läufer (212) zwischen zwei Endpositionen bewegt, und zwar einer dem Nebengetriebe (214a-b) am nächsten liegenden proximalen Position und einer vom Nebengetriebe (214a-b) am weitesten entfernten distalen Positionen, dass, wenn der Läufer (212) in der proximalen Position ist, die Achsen der beiden Gelenke und die Drehachse des Nebengetriebes (214a-b) miteinander fluchten und die Drehachse des Nebengetriebes (214a-b) zwischen den Achsen der beiden Gelenke ist und dass, wenn der Läufer (212) in der distalen Position ist, die Achsen der beiden Gelenke und die Drehachse des Nebengetriebes (214a-b) miteinander fluchten und die Achse des Gelenks des Nebengetriebes (214a-b) zwischen der Achse des Gelenks des Läufers (212) und der Drehachse des Nebengetriebes (214a-b) ist.

4. Luftfahrzeug (100), umfassend mindestens ein Antriebssystem (150, 250, 350, 450) nach einem der vorhergehenden Ansprüche.

5. Luftfahrzeug (100) nach Anspruch 4, **dadurch gekennzeichnet, dass** der Stromerzeuger (202) eine Brennstoffzelle (202) ist und dass das Luftfahrzeug (100) einen Tank (204) für Diwasserstoff, eine Zuführungsleitung (206), die den Diwasserstoff von dem Tank (204) zu der Brennstoffzelle (202) befördert, und ein Kühlsystem (230, 330, 430), das dazu ausgestaltet ist, jeden elektrischen Linearmotor (208a-b) zu kühlen, umfasst.

6. Luftfahrzeug (100) nach Anspruch 5, **dadurch gekennzeichnet, dass** das Kühlsystem (230) den Tank (204) umfasst und, für jeden elektrischen Linearmotor (208ab), eine Zuführungsleitung (206), die dazu ausgebildet ist, einen Wärmeaustausch zwischen dem elektrischen Linearmotor (208a-b) und dem in der Zuführungsleitung (206) zwischen dem Tank (204) und der Brennstoffzelle (202) zirkulierenden Diwasserstoff zu gewährleisten.

7. Luftfahrzeug (100) nach Anspruch 5, **dadurch gekennzeichnet, dass** das Kühlsystem (330) den Tank (204) umfasst und die Zuführungsleitung (206), die dazu ausgebildet ist, einen Wärmeaustausch sukzessive zwischen jedem elektrischen Linearmotor (208a-b) und dem in der Zuführungsleitung (206) zwischen dem Tank (204) und der Brennstoffzelle (202) zirkulierenden Diwasserstoff zu gewährleisten.

8. Luftfahrzeug (100) nach Anspruch 7, **dadurch gekennzeichnet, dass** das Kühlsystem (330) auch einen Wärmetauscher (332) umfasst, der dazu stromab der elektrischen Linearmotoren (208a-b) angeordnet ist, um einen Wärmeaustausch zwischen dem in der Zuführungsleitung (206) zirkulierenden Diwasserstoff und einem Fluid zu gewährleisten.

9. Luftfahrzeug (100) nach Anspruch 7, **dadurch gekennzeichnet, dass** das Kühlsystem (430) einen ersten Wärmetauscher (432), einen zweiten Wärmetauscher (434), eine Austauschleitung (436), in der ein Wärmeträgerfluid zirkuliert, den Tank (204) und die Zuführungsleitung (206) umfasst, dass die Austauschleitung (436) eine Schleife bildet, die dazu ausgebildet ist, sukzessive den ersten Wärmetauscher (432) zu durchqueren, einen Wärmeaustausch sukzessive zwischen jedem elektrischen Linearmotor (208a-b) und dem Wärmeträgerfluid zu gewährleisten, den zweiten Wärmetauscher (434) zu durchqueren und den ersten Wärmetauscher (432) wieder zu erreichen, dass der erste Wärmetauscher (432) dazu ausgebildet ist, einen Wärmeaustausch zwischen dem in der Zuführungsleitung (206) zwischen dem Tank (204) und der Brennstoffzelle (202) zirkulierenden Diwasserstoff und dem in der Austauschleitung (436) zirkulierenden Wärmeträgerfluid zu gewährleisten, dass der zweite Wärmetauscher (434) dazu ausgebildet ist, einen Wärmeaustausch zwischen dem in der Austauschleitung (436) zirkulierenden Wärmeträgerfluid und einem Fluid zu gewährleisten, und dass der erste Wärmetauscher (432) stromauf der elektrischen Linearmotoren (208a-b) angeordnet ist und der zweite Wärmetauscher (434) stromab der elektrischen Linearmotoren (208a-b) in Bezug auf die Strömungsrichtung des Wärmeträgerfluids in der Austauschleitung (436) angeordnet ist.

## Claims

1. Propulsion system (150, 250, 350, 450) for an aircraft (100), having:
- a chassis,
- a propeller (152) mounted so as to be able to move in rotation on the chassis about an axis of rotation (X),
- a main gear (220) as one with the propeller (152) and coaxial with the axis of rotation (X),
- an electric generator (202),
- at least one linear electric motor (208a-b) electrically powered by the electric generator (202) and having a fixed element (210) that is fastened to the chassis and a slider (212) that is able to move in translation along the fixed element (210) in a direction of movement,
- for each linear electric motor (208a-b), a secondary gear (214a-b) meshing with the main gear (220) and mounted so as to be able to move in rotation on the chassis about an axis of rotation perpendicular to the axis of rotation (X), and
- for each linear electric motor (208a-b), a rod (216) with two ends of which one is mounted articulated at an articulation on the slider (212) of the corresponding linear electric motor (208a-b) and of which the other is mounted articulated on the corresponding secondary gear (214a-b) at an articulation that is offset with respect to the axis of rotation of the secondary gear (214a-b) associated with the linear electric motor (208a-b).

2. Propulsion system (150, 250, 350, 450) according to Claim 1, **characterized in that** the direction of movement is parallel to the axis of rotation (X) of the propeller (152).

3. Propulsion system (150, 250, 350, 450) according to either of Claims 1 and 2, **characterized in that** each slider (212) moves between two extreme positions, namely a proximal position as close as possible to the secondary gear (214a-b) and a distal position as far as possible from the secondary gear (214a-b), **in that** when the slider (212) is in the proximal position, the axes of the two articulations and the axis of rotation of the secondary gear (214a-b) are aligned with each other and the axis of rotation of the secondary gear (214a-b) is between the axes of the two articulations and **in that** when the slider (212) is in the distal position, the axes of the two articulations and the axis of rotation of the secondary gear (214a-b) are aligned with each other and the axis of the articulation of the secondary gear (214a-b) is between the axis of the articulation of the slider (212) and the axis of rotation of the secondary gear (214a-b).

4. Aircraft (100) having at least one propulsion system (150, 250, 350, 450) according to one of the preceding claims.

5. Aircraft (100) according to Claim 4, **characterized in that** the electric generator (202) is a fuel cell (202), and **in that** the aircraft (100) has a dihydrogen reservoir (204), a conveying duct (206) that conveys the dihydrogen from the reservoir (204) to the fuel cell (202) and a cooling system (230, 330, 430) arranged to cool each linear electric motor (208a-b).

6. Aircraft (100) according to Claim 5, **characterized in that** the cooling system (230) has the reservoir (204) and, for each linear electric motor (208a-b), a conveying duct (206) that is arranged to ensure an exchange of heat between the linear electric motor (208a-b) and the dihydrogen circulating in the conveying duct (206) between the reservoir (204) and the fuel cell (202).

7. Aircraft (100) according to Claim 5, **characterized in that** the cooling system (330) has the reservoir (204) and the conveying duct (206) that is arranged to ensure an exchange of heat successively between each linear electric motor (208a-b) and the dihydrogen circulating in the conveying duct (206) between the reservoir (204) and the fuel cell (202).

8. Aircraft (100) according to Claim 7, **characterized in that** the cooling system (330) also has a heat exchanger (332) that is arranged downstream of the linear electric motors (208a-b) to ensure an exchange of heat between the dihydrogen circulating in the conveying duct (206) and a fluid.

9. Aircraft (100) according to Claim 7, **characterized in that** the cooling system (430) has a first heat exchanger (432), a second heat exchanger (434), an exchange duct (436) in which a heat-transfer fluid circulates, the reservoir (204) and the conveying duct (206), **in that** the exchange duct (436) forms a loop that is arranged to successively pass through the first heat exchanger (432), ensure an exchange of heat successively between each linear electric motor (208a-b) and the heat-transfer fluid, pass through the second heat exchanger (434) and re-join the first heat exchanger (432), **in that** the first heat exchanger (432) is arranged to ensure an exchange of heat between the dihydrogen circulating in the conveying duct (206) between the reservoir (204) and the fuel cell (202) and the heat-transfer fluid circulating in the exchange duct (436), **in that** the second heat exchanger (434) is arranged to ensure an exchange of heat between the heat-transfer fluid circulating in the exchange duct (436) and a fluid, and **in that** the first heat exchanger (432) is disposed upstream of the linear electric motors (208a-b) and the second heat exchanger (434) is disposed downstream of the linear electric motors (208a-b) with respect to the direction of flow of the heat-transfer fluid in the exchange duct (436).
